# EUROPÄISCHE PATENTSCHRIFT

(11) **EP 1 842 804 B1**
(45) Veröffentlichungstag und Bekanntmachung des Hinweises auf die Patenterteilung: **29.10.2008**
(21) Anmeldenummer: 07090089.9
(22) Anmeldetag: 25.11.2004
(51) Int. Cl.: B65G 17/08

(54) **Kettenglied für eine Förderkette einer Maschine der tabakverarbeitenden Industrie**
Chain link for a conveyor chain
Maillon de chaîne pour chaîne transporteuse

(30) Priorität: 25.11.2003 DE 10355872
(43) Veröffentlichungstag der Anmeldung: 10.10.2007
(62) Teilanmeldung aus: 04090464.1
(73) Patentinhaber: Hauni Maschinenbau AG, 21033 Hamburg (DE)
(72) Erfinder: Müller, Thomas, 20259 Hamburg (DE); Stellmacher, Jan, 20537 Hamburg (DE)
(74) Vertreter: Wenzel & Kalkoff

(56) Entgegenhaltungen:
- DE-U1- 8 112 284
- GB-A- 2 225 762
- US-A- 1 330 116
- US-A- 4 893 709

## Beschreibung

Die Erfindung betrifft ein Kettenglied für eine Förderkette einer Maschine der tabakverarbeitenden Industrie, insbesondere eines Speichers für ein stabförmiges Tabakprodukt, mit Haltemitteln für einen Gelenkbolzen und einem Gelenkbolzenlager zur Verbindung des Kettenglieds mit benachbarten Kettengliedern, und mit einer Tragfläche zum Tragen eines Tabakprodukts, die im wesentlichen parallel zu der durch die Gelenkachsen definierten Gelenkebene angeordnet ist, wobei das Kettenglied zum Zusammenwirken mit einer Umlenkscheibe der Maschine eingerichtet ist.

Kettenglieder für eine Förderkette sind z.B. aus EP 0 680 898 B1 oder DE 43 12 864 C2 bekannt. Beim Einsatz derartiger Kettenglieder für Förderketten beispielsweise in Zigarettenspeichem mit Umlenkscheiben, deren Drehachse gegen die Vertikale geneigt ist, ist eine Schwenkung des Kettenglieds um eine Längsschwenkachse im Kontaktbereich zwischen Kettenglied und Umlenkrad vorgesehen, um die Tragfläche der Kettenglieder beim Umlenken horizontal zu halten. Bei dieser Anordnung verursacht die Zugspannung der Förderkette im Bereich der Umlenkscheibe ein Schwenkmoment auf die Kettenglieder, das in der Praxis von einer lagesichernden Führung an der Außenseite der umgelenkten Kettenglieder aufgenommen wird. Die damit verbundenen Reibungsverluste wirken sich um so nachteiliger aus, je länger der mit Umlenkscheiben zusammenwirkende Teil der Förderkette ist.

Im Stand der Technik ist die Gelenkebene oberhalb der Mitte zwischen der Tragfläche und einer der Tragfläche entgegengesetzten Unterseite des Kettengliedes angeordnet (siehe EP 0 680 898 B1), um einen Ausgleich für das von dem geförderten Produkt verursachte Schwenkmoment zu schaffen. Andererseits führt diese Anordnung infolge der Kettenspannung jedoch zu einem Schwenkmoment auf das Kettenglied um eine zur Längsachse parallele Schwenkachse und daher zu einer Verschärfung der oben genannten Probleme.

Beim Einsatz von Kettengliedern für Förderketten in Maschinen mit Umlenkrollen, deren Drehachse im wesentlichen horizontal verläuft, entsteht durch die Zugspannung der Förderkette ein nachteiliges Biegemoment auf die mit der Umlenkrolle zusammenwirkenden Kettenglieder, wenn diese an ihrer Tragflächenseite etwa in der Mitte zwischen dem Gelenkbolzen und dem Gelenkbolzenlager mit der Umlenkrolle zusammenwirken. Dies könnte durch Verwendung im Querschnitt polygonaler Umlenkrollen vermieden werden, wobei jedes Polygonstück zum Zusammenwirken mit einem Kettenglied vorgesehen ist. Beispielsweise aufgrund eines Verschleißes der Förderkette kann dies zu Problemen bei der Synchronisierung zwischen Förderkette und Umlenkscheibe führen. Weiterhin bereitet es bei einer polygonalen Umlenkrolle Schwierigkeiten, die Förderkette in einer waagrechten Ebene zu halten.

Die Aufgabe der Erfindung besteht darin, ein Kettenglied für eine Förderkette in einer Maschine der tabakverarbeitenden Industrie bereitzustellen, bei dem die Nachteile aufgrund der durch die Kettenspannung hervorgerufenen Biege- bzw. Schwenkmomente an der Umlenkrolle mit im wesentlichen horizontal verlaufender Drehachse reduziert sind und das insbesondere eine verlust- und verschleißarme sowie lagestabile Umlenkung der Förderkette ermöglicht.

Die Erfindung löst die Aufgabe durch die Merkmale des Anspruchs 1. Danach sieht die Erfindung vor, daß das Kettenglied an der Tragflächenseite zum Zusammenwirken mit einer sich um eine im wesentlichen horizontale Achse drehenden Umlenkscheibe in Form einer kreisrunden Umlenkrolle der Maschine eingerichtet ist, wobei der Kontakt des Kettenglieds mit der Umlenkrolle wenigstens im Bereich einer der Gelenkachsen, d.h. im Bereich der Achse der Haltemittel für den Gelenkbolzen oder vorzugsweise des Gelenkbolzenlagers liegt. Durch Verlagerung der Kontaktpunkte des Kettenglieds in den Bereich einer der Gelenkachsen wird ein auf die Kettenglieder wirkendes Biegemoment verhindert oder jedenfalls minimiert.

Nach einer bevorzugten Ausführungsform ist in der die Tragfläche bildenden Wand eine in Längsachse des Kettenglieds verlaufende Ausnehmung für die Umlenkrolle vorgesehen. Die Ausnehmung kann ebenfalls zur seitlichen Führung der Umlenkrolle dienen; dies kann insbesondere dadurch erreicht werden, daß die Breite der Ausnehmung im wesentlichen der Axialausdehnung der Umlenkrolle entspricht. Weiterhin erlaubt diese Ausführungsform, bekannte Kettenglieder durch Anfertigung einer Ausnehmung erfindungsgemäß zu nutzen. Eine solche Ausnehmung ist jedoch nicht zwingend. Bei einer anderen Ausführungsform kann eine Erhebung an der Tragfläche in der Nähe der Gelenkachsen angeordnet sein, die mit der Umlenkrolle in Kontakt steht. Eine solche Erhebung kann beispielsweise von einem Mitnehmer für das Tabakprodukt gebildet werden, wenn dieser anstelle seiner herkömmlichen Anordnung etwa zwischen den Gelenkachsen in deren Nähe angeordnet ist. Es kann in diesem Fall auch eine in Längsachse verlaufende Ausnehmung in der Erhebungen vorgesehen sein, in die die Umlenkrolle eingreift, um eine seitliche Führung zu bewirken. Die Tiefe der Ausnehmung ist dann zweckmäßigerweise geringer als die Höhe der Erhebung über der Tragfläche.

Nach einem vorteilhaften Merkmal ist die Gelenkebene etwa in der Mitte zwischen der Tragfläche und einer der Tragfläche entgegengesetzten Unterseite des Kettengliedes angeordnet. Hierdurch kann das Schwenkmoment auf die Kettenglieder um eine Längsschwenkachse reduziert werden. Dieser Aspekt der Erfindung ist gegebenenfalls eigenständig, d.h. in einer nur auf den Oberbegriff des Anspruchs 1 rückbezogenen Form, beanspruchbar.

Weitere vorteilhafte Merkmale und Ausführungsformen der Erfindung gehen aus den Unteransprüchen und der folgenden Beschreibung der Erfindung unter Bezugnahme auf die beigefügten Zeichnungen hervor. Dabei zeigen:
- Fig. 1:: eine erste perspektivische Ansicht eines Kettengliedes;
- Fig. 2:: eine zweite perspektivische Ansicht des Kettengliedes;
- Fig. 3:: eine Querschnittsansicht des Kettengliedes bei einem Schnitt durch die Symmetrieebene;
- Fig. 4:: eine Draufsicht des Kettengliedes bei einem Querschnitt durch die Gelenkebene;
- Fig. 5:: eine Querschnittsansicht des Kettengliedes bei einem Schnitt durch die in Fig. 3 gezeigte Querebene;
- Fig. 6:: die perspektivische Ansicht gemäß Fig. 1, jedoch mit abgeschnittenem Tragflächen- und Führungsflügel;
- Fig. 7:: die perspektivische Ansicht gemäß Fig. 2, jedoch mit abgeschnittenem Tragflächen- und Führungsflügel;
- Fig. 8:: ein schematischer Ausschnitt aus Fig. 5 im Bereich des Führungselements gemäß einer Ausführungsform und
- Fig. 9:: eine zu Fig. 3 analoge Querschnittsansicht einer Förderkette im Bereich einer Umlenkrolle einer Maschine.

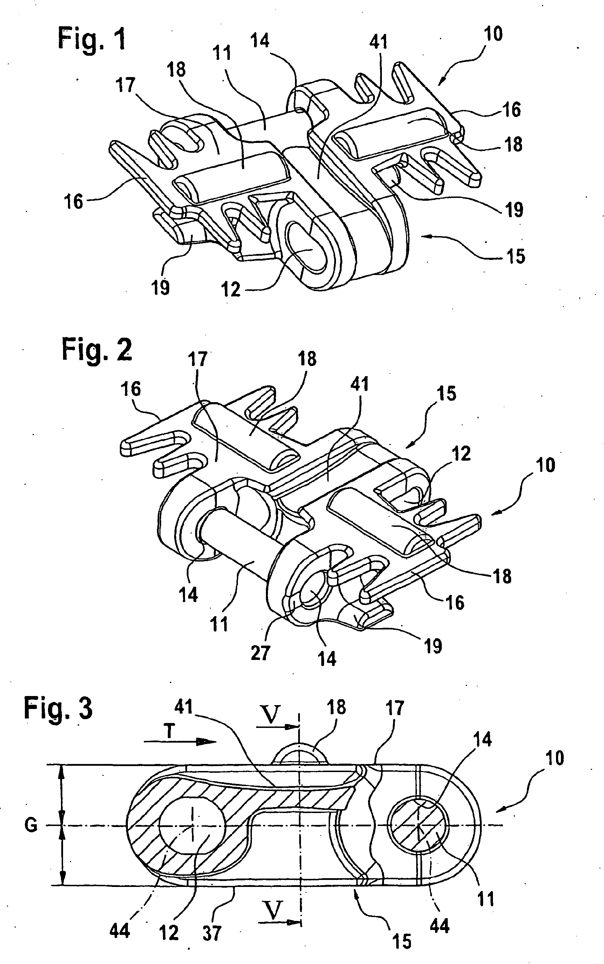

Ein Kettenglied 10 umfaßt Aufnahmen 14 zum Halten eines Gelenkbolzens 11 und ein Gelenkbolzenlager 12. Mittels des Gelenkbolzens 11 können Kettenglieder 10 zu einer Förderkette 13 für eine Maschine der tabakverarbeitenden Industrie verbunden werden. Durch die Gelenkachsen, d.h. die Mittelachsen der Gelenkbolzenaufnahme 14 und des Gelenkbolzenlagers 12, wird die Gelenkebene G definiert (siehe Fig. 3). Die Anordnung der Tragfläche im wesentlichen parallel zur Gelenkebene bezieht sich auf das Tabakprodukt aufnehmenden Teil der Tragfläche, d.h. abgesehen beispielsweise von Mitnehmern für das Tabakprodukt. Die Transportrichtung T verläuft vorzugsweise in Pfeilrichtung gemäß Fig. 3, 4 und 9; sie kann jedoch auch entgegengesetzt zu dieser Pfeilrichtung verlaufen.

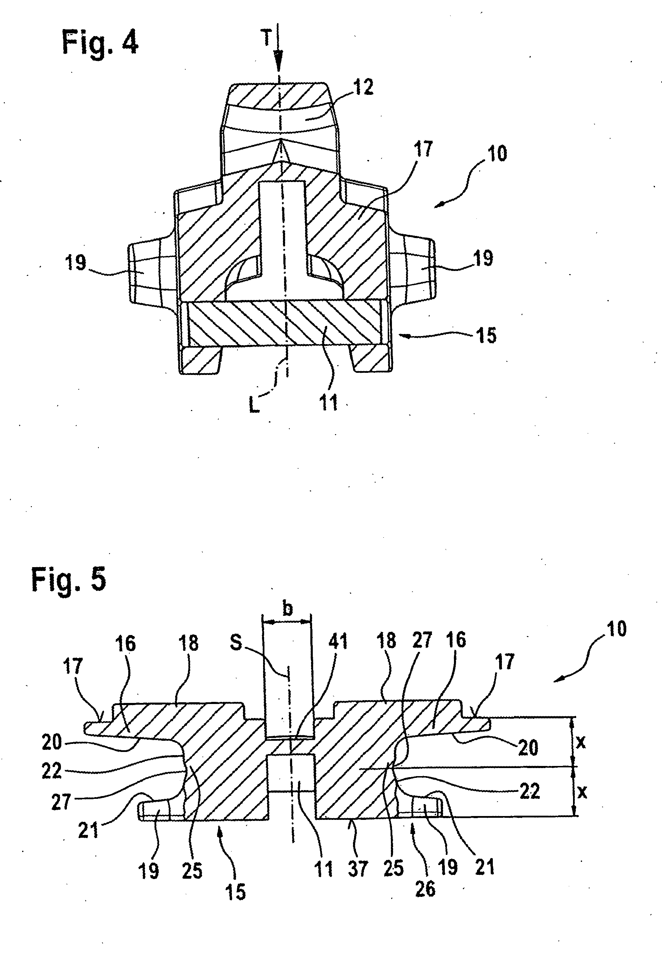

An dem Grundkörper 15 des Kettenglieds 10 sind seitlich zwei plattenförmige Tragelemente 16 angesetzt. Der Begriff "seitlich" ist bezogen auf die Längsachse L des Kettenglieds 10 (siehe Fig. 4), die sich als Schnittgerade der Gelenkebene G und der Symmetrieebene S ergibt. Eine parallel zur Gelenkebene orientierte Tragfläche 17 des Kettenglieds 10, die aus fluchtenden Oberflächen der Tragelemente 16 und des Grundkörpers 15 besteht, dient zum Tragen eines stabförmigen Tabakprodukts, insbesondere Zigaretten, deren Längsachse parallel zu den Gelenkachsen orientiert sind. Auf der Tragfläche 17 des Kettenglieds 10 sind parallel zu den Gelenkachsen orientierte längliche Mitnehmer 18 für das zu fördernde Tabakprodukt vorgesehen.

An der den Tragelementen 16 entgegengesetzten Unterseite 37 des Kettenglieds 10 sind seitlich Führungsflügel 19 angesetzt. In einem Querschnitt senkrecht zur Längsachse L, wie aus Fig. 5 ersichtlich, ergibt sich daher an jeder Seite ein U-förmiges Profil 26 aus dem Tragelement 16 mit Unterseite 20, dem Führungsflügel 19 mit Oberseite 21 und einem eine Seitenwand 22 bildenden Wandteil 25 des Grundkörpers 15. In das U-förmige Führungsprofil 26 kann eine Umlenkscheibe 23 eingreifen, um das Kettenglied 10 beziehungsweise eine aus Kettengliedern 10 gebildete Förderkette 13 im wesentlichen horizontal umzulenken, wobei die nicht gezeigte Drehachse der Umlenkscheibe 23 im wesentlichen senkrecht zur Gelenkebene G orientiert ist. Die im wesentlichen vertikale Drehachse der Umlenkscheibe bedeutet, daß die größte Richtungskomponente der Drehachse die Vertikalkomponente ist, und schließt daher gegen die Vertikale geneigte Drehachsen mit ein. Dabei wirkt der äußere Rand 24 der Umlenkscheibe 23 mit der Seitenwand 22 des Wandteils 25, d.h. dem Grund des U-förmigen Führungsprofils 26 zusammen. Die Kettenglieder 10 sind dementsprechend zur Schwenkung um eine im wesentlichen senkrecht zur Gelenkebene orientierte Schwenkachse eingerichtet. Insbesondere ist das Gelenkbolzenlager 12 nach außen aufgeweitet, wie aus Fig. 4 ersichtlich. Die Umlenkscheibe 23 kann beispielsweise ein Speichenrad sein.

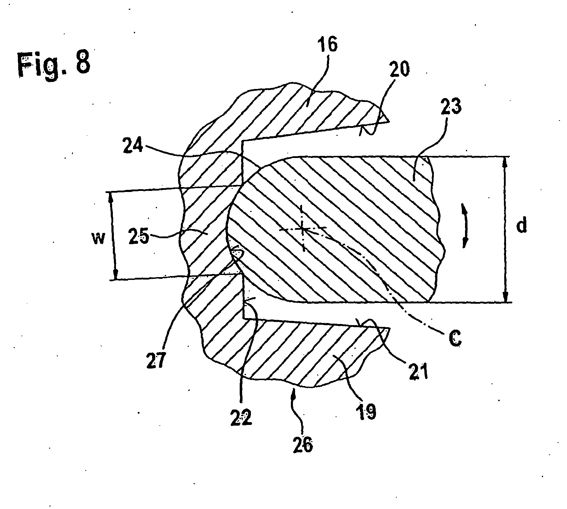

Weiterhin ist die Umlenkscheibe 23 an ihrem äußeren Rand 24 gerundet, wie aus Fig. 8 ersichtlich, damit sie eine Schwenkung um die Längsschwenkachse C des Kettenglieds 10 vollziehen kann, wie in Fig. 8 mit einem Doppelpfeil angedeutet. Zu diesem Zweck weist das U-förmige Führungsprofil 26 eine ausreichende Weite auf (d.h. einen ausreichenden Abstand der Unterseite 20 des Tragelements 16 von der Oberseite 21 des Führungsflügels 19), die insbesondere größer ist als die Axialausdehnung der Umlenkscheibe 23 im Bereich des Führungsprofils 26.

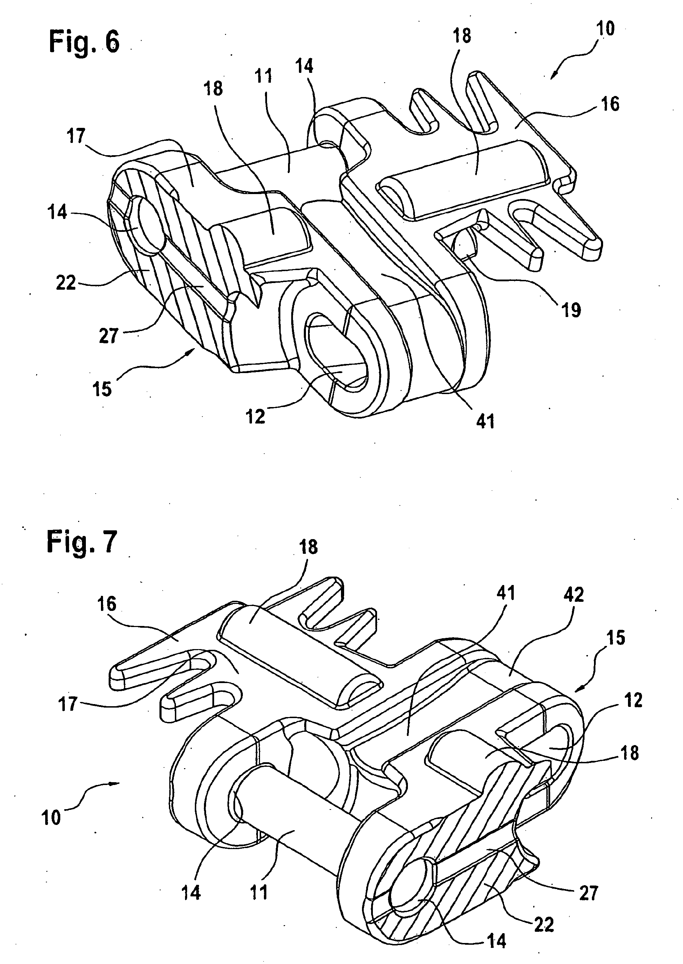

In der Seitenwand 22 des Wandteils 25 ist eine Nut 27 zum Eingreifen der Umlenkscheibe 23 vorgesehen. Die Nut 27 erstreckt sich im vorliegenden Beispiel über die gesamte Länge der Seitenwand 22 des Grundkörpers 15 (siehe Fig. 6, 7), was einfach zu fertigen ist. Sie kann jedoch auch nur in einem mit der Umlenkscheibe 23 zusammenwirkenden Längenbereich vorgesehen sein.

Im Beispiel der Fig. 8 ist die Nut 27 kreisbogenförmig mit einer an den Radius der äußeren Rundung 24 der Umlenkscheibe 23 angepaßten Form. Die lichte Weite w der Nut 27 ist dabei geringer als die Axialausdehnung d der Umlenkscheibe 23 im Bereich des Führungsprofils 26. Es ergibt sich eine Reibungsfläche zwischen der Umlenkscheibe 23 und der Nut 27, wobei die dadurch verursachte Reibung einer Schwenkung des Kettenglieds 10 um die Längsschwenkachse C entgegenwirkt und diese gegebenenfalls verhindern kann. Hierdurch unterscheidet sich die Nut 27, bei der die geschilderte Reibwirkung in der Betriebsposition des Kettenglieds 10, d.h. bei horizontaler Tragfläche 17 ausgeübt wird, von dem U-förmigen Führungsprofil 26. Bei einer Seitenwand 22 ohne Nut 27 würde eine Schwenkbewegung der Umlenkscheibe 23 um eine Längsschwenkachse des Kettenglieds 10 zu einem Abrollen der Umlenkscheibe 23 auf der Seitenwand 22 führen, so daß in der Betriebsposition des Kettenglieds 10, d.h. bei horizontaler Tragfläche 17 im wesentlichen keine vorteilhafte Reibungswirkung erzielbar wäre.

Wie aus Fig. 5 ersichtlich ist das Führungselement 27 vorzugsweise symmetrisch um die Gelenkebene G angeordnet. Die Gelenkebene G ist vorzugsweise in der Mittelebene zwischen der Tragfläche 17 und der Unterseite 37 des Grundkörpers 15 des Kettenglieds 10 angeordnet. Mittels dieser Anordnung werden Schwenkmomente um eine zur Längsschwenkachse des Kettenglieds 10 infolge der Kettenspannung minimiert.

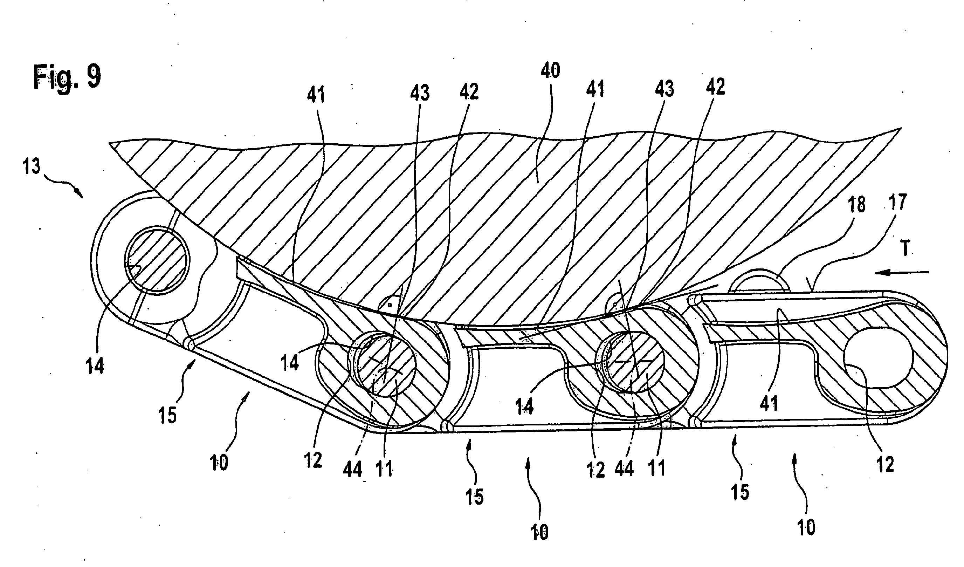

Das Kettenglied 10 ist erfindungsgemäß an der Seite der Tragfläche 17 zum Zusammenwirken mit einer sich um eine im wesentlichen horizontale Achse drehenden kreisrunden Umlenkrolle 40 der Maschine zum entsprechenden Umlenken der Förderkette eingerichtet (siehe Fig. 9). An der Tragflächenseite des Kettenglieds 10 ist zu diesem Zweck eine Ausnehmung 41 vorgesehen, in die die Umlenkrolle 40 eingreift. Die Ausnehmung 41 ist im vorliegenden Beispiel kreisbogenförmig mit einem Radius, der größer ist als der Radius der Umlenkrolle 40. Aufgrund der Form der Ausnehmung 41 weist jedes Kettenglied nur einen mit der Umlenkrolle 40 zusammenwirkenden Bereich 42 auf. Die Ausnehmung 41 ist vorzugsweise länglich und verläuft vorzugsweise im wesentlichen parallel zur Längsachse des Kettenglieds 10. Sie ist vorzugsweise in der Symmetrieebene S des Kettengliedes 10 angeordnet (siehe Fig. 5), um das Auftreten von störenden Schwenkmomenten infolge der Kettenspannung zu vermeiden. Die Breite b der Ausnehmung 41 korrespondiert mit der Breite der Umlenkrolle 40 an ihrem Umfang, beispielsweise eines sich radial auswärts erstreckenden Absatzes der Umlenkrolle 40, so daß die Ausnehmung 41 eine seitliche Führung für die Umlenkrolle 40 darstellt. Zweckmäßigerweise sind die Mitnehmer 18 auf der Tragfläche 17 im Bereich der Umlenkrolle 40 unterbrochen.

Der Kontaktbereich 42 zwischen dem Kettenglied 10 und der Umlenkrolle 40 liegt vorzugsweise im Bereich einer der Gelenkachsen, d.h. im Bereich der Gelenkbolzenhalterungsachse oder der Gelenkbolzenlagerachse, um nachteilige Biegemomente auf das Kettenglied 10 aufgrund der Kettenspannung zu vermeiden. Dies bedeutet, daß in einem Querschnitt wie in Fig. 9 gezeigt der Abstand des Kontaktbereichs 42 von dem Schnittpunkt 43 des Lots der Gelenkachse 44 auf die Oberfläche der Umlenkrolle 40 klein ist gegen den Abstand zweier benachbarter Schnittpunkte 43. "Klein" bedeutet höchstens 20 %, vorzugsweise höchstens 10 %. Ohne die Ausnehmung 41 würde das Kettenglied 10 etwa in der Mitte zwischen zwei benachbarten Gelenkachsen 44 bzw. benachbarten Schnittpunkten 43 mit der Umlenkrolle 40 in Kontakt stehen, was ein erhebliches Biegemoment aufgrund der Kettenspannung verursachen würde. Es ist auch möglich, daß ein Kettenglied 10 Kontaktbereiche im Bereich beider Gelenkachsen 44 aufweist.

## Patentansprüche

1. Kettenglied für eine Förderkette einer Maschine der Tabak verarbeitenden Industrie, insbesondere eines Speichers für ein stabförmiges Tabakprodukt, mit Haltemitteln (14) für einen Gelenkbolzen (11), mit einem Gelenkbolzenlager (12) zur Verbindung des Kettenglieds (10) mit benachbarten Kettengliedern und mit einer Tragfläche (17) zum Tragen eines Tabakprodukts, die im Wesentlichen parallel zu der durch die Gelenkachsen (44) definierten Gelenkebene (G) angeordnet ist, wobei das Kettenglied (10) zum Zusammenwirken mit wenigstens einer Umlenkscheibe (23) der Maschine eingerichtet ist, **dadurch gekennzeichnet, dass** das Kettenglied (10) an der Tragflächenseite zum Zusammenwirken mit einer sich um eine im Wesentlichen horizontale Achse drehenden Umlenkscheibe in Form einer kreisrunden Umlenkrolle (40) der Maschine eingerichtet ist, wobei der Kontakt des Kettenglieds (10) mit der Umlenkrolle (40) wenigstens im Bereich einer der Gelenkachsen (44) liegt.

2. Kettenglied nach Anspruch 1,**dadurch gekennzeichnet, dass** der Kontakt des Kettenglieds (10) mit der Umlenkrolle (40) im Bereich des Gelenks liegt.

3. Kettenglied nach Anspruch 1 oder 2, **dadurch gekennzeichnet dass** in der die Tragfläche (17) bildenden Wand eine parallel zur Längsachse (L) des Kettenglieds (10) verlaufende Ausnehmung (41) zum Eingreifen der Umlenkrolle (40) vorgesehen ist.

4. Kettenglied nach Anspruch 3, **dadurch gekennzeichnet, dass** die Ausnehmung (41) in einem zu den Gelenkachsen (44) senkrechten Querschnitt kreisbogenförmig ist.

5. Kettenglied nach Anspruch 4, **dadurch gekennzeichnet, dass** der Radius des Kreisbogens mindestens so groß ist wie der Außenradius der Umlenkrolle (40).

6. Kettenglied nach einem der Ansprüche 3 bis 5, **dadurch gekennzeichnet, dass** die Breite der Ausnehmung (41) mit der Axialausdehnung der Umlenkrolle (40) an ihrem Umfang korrespondiert.

7. Kettenglied nach einem der Ansprüche 1 bis 6, **dadurch gekennzeichnet, dass** die Gelenkebene (G) in der Mittelebene zwischen der Tragfläche (17) und einer der Tragfläche entgegengesetzten Unterseite (37) des Kettengliedes (10) angeordnet ist.

8. Kettenglied nach einem der Ansprüche 1 bis 7, **dadurch gekennzeichnet, dass** an der Tragfläche in der Nähe der Gelenkachsen eine Erhebung angeordnet ist, die mit der sich um eine im Wesentlichen horizontale Achse drehenden kreisrunden Umlenkrolle in Kontakt steht.

9. Kettenglied nach Anspruch 8, **dadurch gekennzeichnet, dass** eine in Längsachse des Kettenglieds verlaufende Ausnehmung in der Erhebung vorgesehen ist, in die die Umlenkrolle eingreift.

10. Kettenglied nach einem der Ansprüche 1 bis 9, **dadurch gekennzeichnet, dass** das Kettenglied (10) seitlich zum Zusammenwirken mit einer sich um eine im Wesentlichen vertikale Achse drehenden Umlenkscheibe (23) der Maschine eingerichtet ist.

11. Maschine der tabakverarbeitenden Industrie, insbesondere ein Speicher für ein stabförmiges Tabakprodukt, mit einer Förderkette, die aus Kettengliedern (10) nach einem der Ansprüche 1 bis 10 besteht.

## Claims

1. Chain link for a conveying chain of a machine of the tobacco processing industry, in particular a storage device for a rod-shaped tobacco product, with holding means (14) for a hinge pin (11), with a hinge pin bearing (12) for connecting the chain link (10) to adjacent chain links and with a carrying surface (17) for carrying a tobacco product, which carrying surface (17) is arranged substantially parallel to the hinge plane (G) defined by the hinge axes (44), wherein the chain link (10) is designed for cooperation with at least one deflection plate (23) of the machine, **characterized in that** on the side of the carrying surface the chain link (10) is designed to cooperate with a deflection plate in the form of a round deflection roller (40) of the machine, which rotates about a substantially horizontal axis, wherein the contact of the chain link (10) with the deflection roller (40) lies at least in the region of one of the hinge axes (44).

2. Chain link according to claim 1, **characterized in that** the contact of the chain link (10) with the deflection roller (40) lies in the region of the hinge.

3. Chain link according to claim 1 or 2, **characterized in that** in the wall forming the carrying surface (17) is provided a recess (41) running parallel to the longitudinal axis (L) of the chain link (10) for engagement of the deflection roller (40).

4. Chain link according to claim 3, **characterized in that** the recess (41) is arcuate in a cross-section perpendicular to the hinge axes (44).

5. Chain link according to claim 4, **characterized in that** the radius of the arc is at least as large as the outer radius of the deflection roller (40).

6. Chain link according to any one of claims 3 to 5, **characterized in that** the width of the recess (41) corresponds to the axial extent of the deflection roller (40) at its circumference.

7. Chain link according to any one of claims 1 to 6, **characterized in that** the hinge plane (G) is arranged in the centre plane between the carrying surface (17) and a lower side (37) of the chain link (10) opposite the carrying surface.

8. Chain link according to any one of claims 1 to 7, **characterized in that** a projection is arranged on the carrying surface near the hinge axes, which is in contact with the round deflection roller which rotates about a substantially horizontal axis.

9. Chain link according to claim 8, **characterized in that** a recess extending in the longitudinal axis of the chain link is provided in the projection, in which the deflection roller engages.

10. Chain link according to any one of claims 1 to 9, **characterized in that** the chain link (10) is designed laterally for cooperation with a deflection plate (23) of the machine which rotates about a substantially vertical axis.

11. Machine of the tobacco processing industry, in particular a storage device for a rod-shaped tobacco product, with a conveying chain which consists of chain links (10) according to any one of claims 1 to 10.

## Revendications

1. Maillon de chaîne pour chaîne transporteuse d'une machine de l'industrie de transformation du tabac, en particulier d'un réservoir de stockage pour produit de tabac en forme de bâtonnet, comprenant des moyens de retenue (14) d'un tourillon d'articulation (11), un palier de tourillon d'articulation (12) pour raccorder le maillon de chaîne (10) à des maillons de chaîne adjacents, et une surface d'appui (17) pour porter un produit de tabac, laquelle est disposée dans une direction sensiblement parallèle au plan d'articulation (G) défini par les axes d'articulation (44), le maillon de chaîne (10) étant disposé pour coopérer avec au moins une poulie de renvoi (23) de la machine, **caractérisé en ce que** le maillon de chaîne (10) est disposé du côté de la surface d'appui pour coopérer avec une poulie de renvoi tournant autour d'un axe sensiblement horizontal et ayant la forme d'un rouleau déflecteur (40) circulaire de la machine, le point de contact du maillon de chaîne (10) avec le rouleau déflecteur (40) étant situé au moins dans la zone de l'un des axes d'articulation (44).

2. Maillon de chaîne selon la revendication 1, **caractérisé en ce que** le point de contact du maillon de chaîne (10) avec le rouleau déflecteur (40) est situé dans la zone de l'articulation.

3. Maillon de chaîne selon la revendication 1 ou 2, **caractérisé en ce qu'**est prévu dans la paroi formant la surface d'appui (17) un évidement (41) s'étendant parallèlement à l'axe longitudinal (L) du maillon de chaîne (10) pour l'engrènement du rouleau déflecteur (40).

4. Maillon de chaîne selon la revendication 3, **caractérisé en ce que** l'évidement (41), en coupe transversale perpendiculairement aux axes d'articulation (44), a la forme d'un arc de cercle.

5. Maillon de chaîne selon la revendication 4, **caractérisé en ce que** le rayon de l'arc de cercle est au moins aussi grand que le rayon extérieur du rouleau déflecteur (40).

6. Maillon de chaîne selon l'une des revendications 3 à 5, **caractérisé en ce que** la largeur de l'évidement (41) correspond à l'étendue axiale du rouleau déflecteur (40) sur sa périphérie.

7. Maillon de chaîne selon l'une des revendications 1 à 6, **caractérisé en ce que** le plan d'articulation (G) est situé dans le plan médian entre la surface d'appui (17) et une face inférieure (37) du maillon de chaîne (10) opposée à la surface d'appui.

8. Maillon de chaîne selon l'une des revendications 1 à 7, **caractérisé en ce qu'**est disposé sur la surface d'appui, à proximité des axes d'articulation, un bossage qui est en contact avec le rouleau déflecteur circulaire en rotation autour d'un axe sensiblement horizontal.

9. Maillon de chaîne selon la revendication 8, **caractérisé en ce qu'**un évidement s'étendant dans l'axe longitudinal du maillon de chaîne est prévu dans le bossage, évidement dans lequel s'engage le rouleau déflecteur.

10. Maillon de chaîne selon l'une des revendications 1 à 9, **caractérisé en ce que** le maillon de chaîne (10) est disposé latéralement pour coopérer avec une poulie de renvoi (23) de la machine, qui tourne autour d'un axe sensiblement vertical.

11. Machine de l'industrie de transformation du tabac, en particulier un réservoir de stockage pour produit de tabac en forme de bâtonnet, comprenant une chaîne transporteuse constituée de maillons de chaîne (10) selon l'une des revendications 1 à 10.
